# EUROPÄISCHE PATENTSCHRIFT

(11) **EP 0 667 177 B1**
(45) Veröffentlichungstag und Bekanntmachung des Hinweises auf die Patenterteilung: **10.09.1997**
(21) Anmeldenummer: 94120071.9
(22) Anmeldetag: 19.12.1994
(51) Int. Cl.: B01D 35/30, B01D 29/01, B01D 29/11, B01D 46/24

(54) **Flüssigkeitsfilter**
Filter for liquids
Filtre pour liquides

(30) Priorität: 30.12.1993 DE 4344983
(43) Veröffentlichungstag der Anmeldung: 16.08.1995
(73) Patentinhaber: HOECHST AKTIENGESELLSCHAFT, 65929 Frankfurt am Main (DE)
(72) Erfinder: Gübitz, Franz, D-65779 Kelkheim (DE); Reitzel, Gunther, D-65468 Trebur (DE)

(56) Entgegenhaltungen:
- EP-A- 0 217 482
- EP-A- 0 559 011
- DE-A- 3 537 794
- FR-A- 2 255 933

## Beschreibung

Die Erfindung betrifft einen Filter zum Reinigen von Mineralöl, z.B. Kraftstoffen und Heizöl, bei denen die Bauteile, z.B. das Filtermaterial, Gehäuse, sowie Stütz-und Verbindungskörper aus einem thermoplastischen Polymer hergestellt sind und bei denen die Verbindungen zwischen Filter und Gehäuse sowie gegebenenfalls Stützkörper durch Schweißen erfolgt.

Druckerzeugende Elemente der Kfz-Einspritzpumpe und Einspritzdüsen sind mit einer Genauigkeit von wenigen Tausendstel Millimeter aufeinander abgestimmt. Dies bedeutet, daß Verunreinigungen im Kraftstoff, welche diese Größe erreichen, den Verschleiß fördern bzw. die Funktion der feinbearbeiteten Teile gefährden können. Eine schlechte Filterung kann deshalb zu Schäden an Pumpenkolben, Druckventilen und Einspritzdüsen führen. Die Folgen eines starken Verschleißes sind:
ungünstige Verbrennung
hoher Kraftstoffverbrauch
Rauchbildung
schlechtes Starten
unruhiger Leerlauf
geringere Leistung des Motors

Die Reinigung des Kraftstoffs ist also von großer Wichtigkeit und muß durch spezielle, den Erfordernissen der Einspritzpumpe angepaßte Filter erfolgen. Nach Art der Verwendung unterscheidet man deshalb Einfachfilter, Stufenfilter und Parallelfilter jeweils mit und ohne Wasserspeicher.

Besonders verbreitet sind Baueinheiten, bei denen ein feinporiges Filter (mittlere Porengröße je nach Motorenkonzept ca 5 bis 15 µm) in einem Gehäuse angeordnet ist. Das Filter besteht üblicherweise aus Spezialpapier, das als Tasche spiralförmig gewickelt oder sternförmig gefaltet und über Stützkörper im Gehäuse angeordnet ist. Als Gehäusewerkstoff wird im allgemeinen Metall oder ein thermoplastisches Polymer verwendet.

Zwecks vollständiger Trennung der Schmutzseite von der Reinseite des Filtereinsatzes muß dieser gegenüber dem Gehäuse abgedichtet werden. Dies erfolgt meist mit Spezialklebern, zuweilen in Verbindung mit Dichtungen aus kraftstoffbeständigen Elastomeren. Ebenso ist zur Abdichtung zwischen Gehäuse und Gehäusedeckel allgemein die Verwendung einer Elastomer-Dichtung erforderlich. Das Einbringen des Klebers plus Aushärtungszeit stellen ebenso wie die Verwendung von Dichtungen aus kraftstoffbeständigen Elastomeren deutliche Kostenfaktoren dar. Nach einer bestimmten Betriebsdauer wird dieser Filtertyp als Ganzes ausgetauscht.

Andere Bauarten von Kraftstoffiltern arbeiten mit sogenannten Filtereinsätzen. Dabei handelt es sich um Ausführungen, bei denen das Filter aus Filz oder Papier zwischen einem inneren und äußeren perforierten metallischen Stützkörper angeordnet und dieser Stützkörper oben und unten durch Deckel verschlossen ist. Auch bei derartigen Filtereinsätzen muß, um die Reinseite von der Schmutzseite exakt zu separieren, mit entsprechenden Dichtungen und/oder Klebungen gearbeitet werden. Diese Baueinheit wird dann in ein Gehäuse gebracht, dessen Ober- und Unterteil durch Verschraubung miteinander verbunden sind. Nach entsprechender Betriebsdauer wird die Verschraubung gelöst und nur der Filtereinsatz ausgewechselt.

Alle bisher eingesetzten Filterausführungen zeigen den Nachteil, daß sie aus mehreren unterschiedlichen Werkstoffen bestehen und somit als Ganzes praktisch nicht recyclierbar sind. Im Rahmen der Resourcenschonung werden gegenwärtig Konzepte untersucht, bei denen durch Demontage der Altteile der benutzten Filter eine Trennung in Metall- und Nichtmetall-Anteile erfolgt. Die Metallmengen können nach bekannten Verfahren wieder aufgearbeitet werden. Bei den nicht metallischen Demontagemengen handelt es sich aber um Gemische aus Filterpapier, Filz, Klebstoffen und Elastomeren, die praktisch nur per Deponie oder Verbrennung entsorgbar sind.

Es bestand daher die Aufgabe, die geschilderten Nachteile zu vermeiden.

Die Erfindung betrifft ein Flüssigkeitsfilter zum Reinigen von Mineralöl, bei dem alle Bauteile aus einem thermoplastischen Polymer bestehen.

Bauteile für das Filter gemäß der Erfindung sind definitionsgemäß Gehäuse, Filtermaterial, Stütz- und Verbindungskörper.

Vorzugsweise wird als thermoplastisches Polymer, das natürlich mineralölbeständig sein muß, Polyacetal (POM) verwendet, d.h. Oxymethylen-Homopolymere und Oxymethylen-Copolymere, die bevorzugt Oxyethylen-Einheiten als Cobausteine enthalten, sowie Terpolymere. Alle Polymere, die über 50 % der wiederkehrenden Einheiten (CH₂O) enthalten, werden hierbei eingeschlossen. Polyacetal ist für die Herstellung von paßgenauen Formteilen bekannt.

Wichtig bei dem Filter gemäß der Erfindung ist es, daß alle Bauteile aus demselben Polymer aufgebaut sind, so daß diese bei einem möglichen Recyclingprozess leichter aufarbeitbar sind und die Verwendung von Klebstoffen und Elastomer-Dichtungen vermieden wird. Gerade sortenreines Alt-Polyacetal läßt sich einwandfrei und problemlos wieder aufarbeiten. Somit ist sowohl die Herstellung als auch eine eventuelle Entsorgung besonders kostengünstig.

Die Herstellung der massiven Formteile, die für den Aufbau des Filters nötig sind, erfolgt vorab durch Spritzgießen in getrennnten Arbeitsgängen. Für die Herstellung des Filtermaterials, das im allgemeinen ein "non-woven"-Material (Vlies oder Filz) ist, können die zur Herstellung von Vliesen aus Thermoplasten üblichen und bekannten Produktionsverfahren verwendet werden. Je nach gewünschter Porengröße, Durchflußmenge und Filterdicke kann eine Nachbearbeitung der Vliesbahn z.B. durch Nadelung, Kalandrieren und kurzzeitige Temperatureinwirkung vorgenommen werden.

Die Verbindung zwischen den Bauelementen des Filters gemäß der Erfindung, bei denen ein flüssigkeitsdichter Verbund gegeben sein muß, z.B. zwischen Filtermaterial, Filterboden bzw. Filterdeckel (bei sogenannten Filtereinsätzen) und Filtermaterial, Filterstützkörpern und Gehäuse, erfolgt durch Schweißen. Geeignet sind grundsätzlich alle für Thermoplaste entwickelte Schweißverfahren, bevorzugt wird mit dem Heizelementschweißverfahren gearbeitet.

Die Verschweißung eines Massivteiles mit einem aus dem gleichen Werkstoff hergestellten "Nicht-Massiv-Teil" (Vlies, Schaum) ist allgemein nur sehr schwierig zu bewerkstelligen, da die Wärmekapazität derartiger Teile sehr unterschiedlich ist. Bei gleichzeitiger und/oder gleichartiger Erwärmung von z.B. Filtermaterial (Vlies) und Filterdeckel (Massivteil) wird, aufgrund der im Vlies gegebenen sehr niedrigen Wanddicken, das Material sehr schnell aufgeschmolzen. Ein Kollabieren des Faserverbundes mit deutlicher Minderung des vorher von der Vliesstruktur eingenommenen Volumens ist die Folge. Die Volumenkontraktion, in Verbindung mit der relativ niedrigen Steifheit des Vlieses, machen eine Schweißung des Filters mit dem parallel zu diesem Teil erwärmten Filterdeckel äußerst schwierig, da die vergleichsweise wesentlich höhere Wanddicke des massiven Teiles erheblich größere Wärmemengen zum Aufschmelzen benötigt.

Im Filter gemäß der Erfindung wird die dem Filtermaterial zugewandte Seite des Massivteiles mit erhabenen Strukturen (Rippen, Noppen, Stegen oder ähnliches) versehen. Nach deren Erwärmung auf Temperaturen über dem Schmelzpunkt des thermoplastischen Polymers werden diese plastifizierten Strukturen mit dem nicht erwärmten Filtermaterial zusammengefügt. Dabei dringt das plastifizierte Material des Massivteiles teilweise in die Vliesstruktur des Filtermaterials ein, erwärmt in den Grenzzonen die Fasern bis über den Schmelzpunkt und führt so zu einer echten Verschweißung. Bei Zugversuchen sind die Brüche generell im Vliesbereich und nicht an den Schweißzonen aufgetreten.

Das Filter gemäß der Erfindung eignet sich zum Reinigen von Mineralöl, vorzugsweise Kraftstoffen und Heizöl, aber auch andere Flüssigkeiten anorganischer oder organischer Natur können durch die Verwendung des Filters von Verunreinigungen befreit werden.

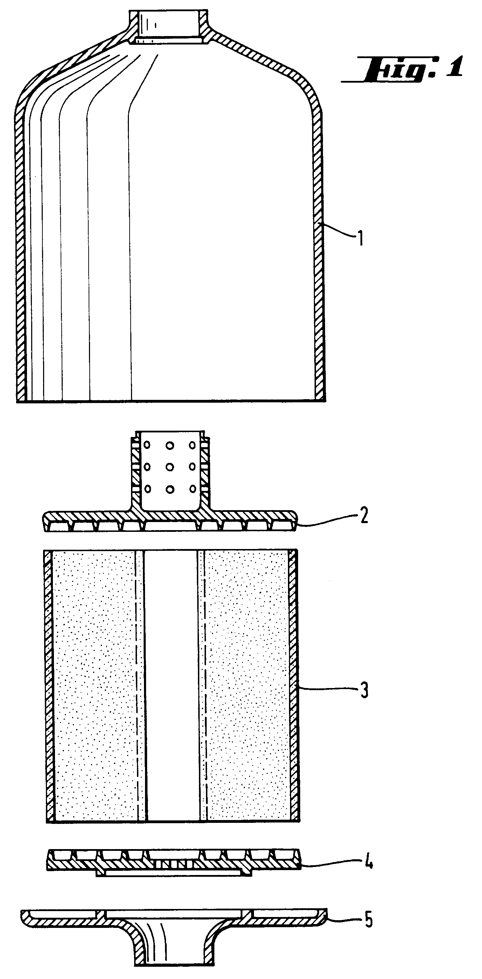

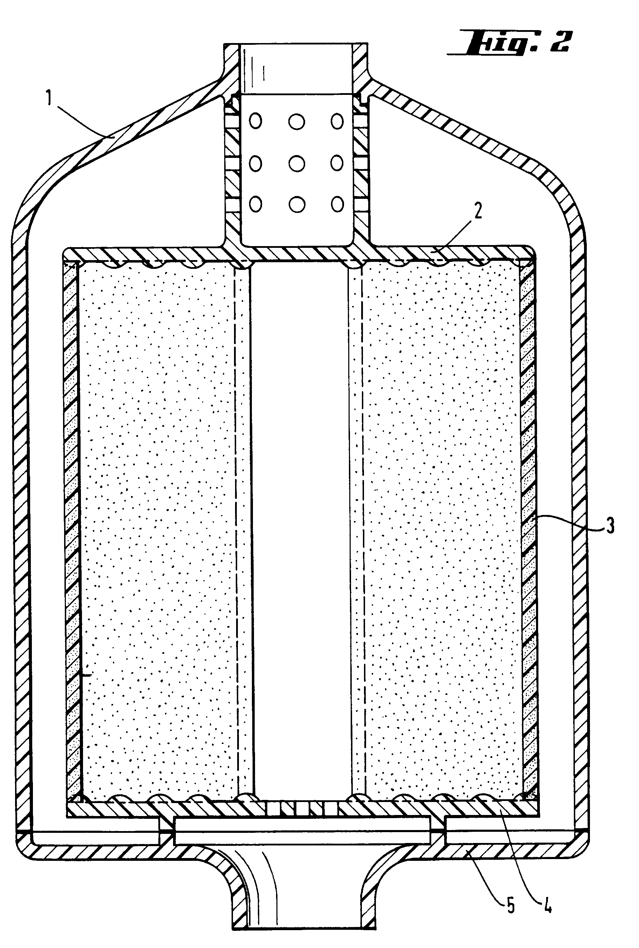

Das Flüssigkeitsfilter besteht im allgemeinen aus folgenden Bauteilen (siehe Fig. 1 und 2).
1. Gehäuse
2. Filterdeckel
3. Filtermaterial, bestehend aus POM-Vlies
4. Filterboden
5. Gehäusedeckel
und gegebenenfalls weiteren, bei bestimmten Anwendungen zusätzlichen, Funktionsteilen, z.B. Wasserabscheidern oder Befestigungselementen.

Bei der Herstellung des Filters werden die radial verlaufenden Rippen des Filterdeckels (2) und Filterbodens (4) durch Erhitzung plastifiziert und danach unter mäßigem Druck (0,2 N/mm²) mit dem aus POM-Vlies durch Wickeln hergestellten Filter (3) zusammengefügt. Die Halterung dieses Filterkörpers im Gehäuse (1) erfolgt über eine Zentrierung, die im Gehäuse integriert ist. Zum Gehäusedeckel (5) hin erfolgt die Verbindung durch Verschweißung von Filterboden und Gehäusedeckel. Gehäuse (1) und Gehäusedeckel werden ebenfalls durch Schweißung miteinander verbunden.

## Patentansprüche

1. Flüssigkeitsfilter aus mehreren Bauteilen, dadurch gekennzeichnet, daß alle Bauteile aus einem thermoplastischen Polymer bestehen.

2. Filter nach Anspruch 1, dadurch gekennzeichnet, daß das thermoplastische Polymer Polyacetal ist.

3. Filter nach Anspruch 1 oder 2, dadurch gekennzeichnet, daß es aus Filtergehäuse, Gehäusedeckel, Filtermaterial, Sieb, Stützkörper und gegebenenfalls weiteren Bauteilen besteht.

4. Filter nach einem oder mehreren der Ansprüche 1 bis 3, dadurch gekennzeichnet, daß die mit dem Filtermaterial direkt zu verbindenden Bauelemente auf der dem Filtermaterial zugewandten Seite des Massivteiles eine erhabene Struktur in Form von Rippen, Noppen oder Stegen aufweisen.

5. Filter nach einem oder mehreren der Ansprüche 1 bis 3, dadurch gekennzeichnet, daß das Filtermaterial in Form von non-woven-Material vorliegt.

6. Filter nach einem oder mehreren der Ansprüche 4 bis 5, dadurch gekennzeichnet, daß das plastifizierte Material des Massivteiles teilweise in die Vliesstruktur des Filtermaterials eingedrungen und verschweißt ist.

7. Verfahren zur Herstellung eines Flüssigkeitsfilters aus einem thermoplastischen Polymer, dadurch gekennzeichnet, daß vorab gefertigte massive Formteile aus dem thermoplastischen Polymer, die mit erhabenen Strukturen an den dem Filtermaterial zugewandten Seiten versehen sind, an den Strukturen auf Temperaturen über den Schmelzpunkt des thermoplastischen Polymers erwärmt und anschließend mit dem nicht erwärmten Filtermaterial aus dem thermoplastischen Polymer zusammengefügt werden.

8. Verwendung des Filters nach einem oder mehreren der Ansprüche 1 bis 6 zur Reinigung von anorganischen oder organischen Flüssigkeiten.

9. Verwendung nach Anspruch 8 zum Reinigen von Mineralöl, vorzugsweise Kraftstoffen und Heizöl.

## Claims

1. A liquid filter consisting of a plurality of components, wherein all the components are composed of a thermoplastic polymer.

2. The filter as claimed in claim 1, wherein the thermoplastic polymer is polyacetal.

3. The filter as claimed in claim 1 or 2, wherein it is composed of filter housing, housing cover, filter material, screen, support body and, if appropriate, other components.

4. The filter as claimed in one or more of claims 1 to 3, wherein the components to be joined directly to the filter material have a raised structure in the form of ribs, knobs or ridges on the side of the solid part facing the filter material.

5. The filter as claimed in one or more of claims 1 to 3, wherein the filter material is present in the form of nonwoven material.

6. The filter as claimed in one or more of claims 4 to 5, wherein the plasticized material of the solid part has partially penetrated into the nonwoven web structure of the filter material and is welded into it.

7. A process for the production of a liquid filter composed of a thermoplastic polymer, which comprises solid moldings composed of the thermoplastic polymer fabricated in advance which are furnished with raised structures on the sides facing the filter material being heated at the structures to temperatures above the melting point of the thermoplastic polymer and then being joined to the unheated filter material composed of the thermoplastic polymer.

8. Use of the filter as claimed in one or more of claims 1 to 6 for purifying inorganic or organic liquids.

9. Use as claimed in claim 8 for purifying mineral oil, preferably fuels and heating oil.

## Revendications

1. Filtre de liquides comportant plusieurs composants caractérisé en ce que tous les composants sont en un polymère thermoplastique.

2. Filtre selon la revendication 1 caractérisé en ce que le polymère thermoplastique est un polyacétal.

3. Filtre selon la revendication 1, caractérise en ce qu'il est constitué de boîtier de filtre, de couvercle du boîtier, de matière filtrante, de tamis, d'élements de support et éventuellement d'autres composants.

4. Filtre selon une ou plusieurs des revendications 1 à 3, caractérisé en ce que les composants à raccorder directement à la matière filtrante présentent, sur le côté tourné vers la matière filtrante de la pièce massive, une structure en relief sous forme de nervures, de noppes ou d'entretoises.

5. Filtre selon une ou plusieurs des revendications 1 à 3, caractérisée en ce que la matière filtrante se présente sous forme de matière non tissée.

6. Filtre selon une ou plusieurs des revendication 4 à 5, caractérisé en ce que la matière plastifiée du composant massif penètre partiellement dans la structure de la nappe de matière filtrante et est soudée.

7. Procédé pour la préparation d'un filtre de liquides en un polymère thermoplastique caractérisé en ce que l'on chauffe les pièces massives, fabriquées auparavant en le polymère thermoplastique, présentant des structures en relief sur le côté tourné vers la matière filtrante, à une température supérieure au point de fusion du polymère thermoplastique et ensuite, on les assemble avec la matière filtrante en le polymère thermoplastique.

8. Utilisation du filtre selon une ou plusieurs des revendications 1 à 6, pour la purification de liquides organiques et inorganiques.

9. Utilisation selon la revendication 8,11 pour la purification d'huile minérale, notamment de carburants et de fioul domestique.
